(19) Europäisches Patentamt
European Patent Office
Office européen des brevets

(11) **EP 0 644 990 B1**

(12) **EUROPEAN PATENT SPECIFICATION**

(45) Date of publication and mention
of the grant of the patent:
**13.10.1999 Bulletin 1999/41**

(21) Application number: **93916476.0**

(22) Date of filing: **10.06.1993**

(51) Int Cl.⁶: **F16L 9/12**, F16L 11/127

(86) International application number:
**PCT/US93/05531**

(87) International publication number:
**WO 93/25835 (23.12.1993 Gazette 1993/30)**

(54) **MULTI-LAYER FUEL AND VAPOR TUBE**

MEHRSCHICHTIGE KRAFTSTOFF- UND DAMPFLEITUNG

CONDUITES A PLUSIEURS COUCHES POUR LE CARBURANT ET LES VAPEURS D'ESSENCE

(84) Designated Contracting States:
**DE FR GB IT SE**

(30) Priority: **11.06.1992 US 896824**
**11.06.1992 US 897304**
**16.10.1992 US 962249**

(43) Date of publication of application:
**29.03.1995 Bulletin 1995/13**

(73) Proprietor: **ITT MANUFACTURING
ENTERPRISES, INC.
Wilmington, Delaware 19801 (US)**

(72) Inventors:
• **NOONE, David, L.**
**Southfield, MI 48076 (US)**
• **MITCHELL, Frank, L.**
**Rochester, MI 48307 (US)**

(74) Representative:
**Dreiss, Fuhlendorf, Steimle & Becker
Postfach 10 37 62
70032 Stuttgart (DE)**

(56) References cited:
**DE-C- 3 827 092        FR-A- 2 114 550
US-A- 4 303 457        US-A- 5 038 833
US-A- 5 076 329**

**Description**

The invention relates to a multi-layer fuel and vapor tube with the features of the preamble of claim 1.

An alcohol resistant multi-layer tube for motor vehicles is known from DE 3827092 having an inner layer of polyamide, an intermediate layer of polyvinyl-alcohol, a thick outer layer of polyamide and a covering layer of polyester. The tubing is coextruded and resists mechanical stress especially under high-temperature conditions. The tube does not provide a hydrocarbon barrier.

US 5 170 011 discloses a hose assembly for fuels having a tubular inner liner of polymeric fluorocarbon material and an outer liner comprising an expanded polyamide material disposed about the inner liner. Further, the assembly includes a conductive strip formed along the inner liner for dissipating electrical charges. The polyamide material of the outer liner increases the strength of the hose assembly but does not provide a hydrocarbon barrier.

It is the object of the present invention to provide a tubing consisting of a material which can be employed in motor vehicles, which is durable and prevents or reduces permeation of organic materials therethrough. Additionally, the tubing should be essentially nonreactive with components of the liquid being conveyed therein.

These problems are solved by the features of the characterizing portion of claim 1. According to the invention, the thermoplastic material employed in the intermediate bonding layer includes as a major constituent an extrudable, melt-processible thermoplastic polyester selected from the group consisting of polybutylene terephalate, polyethylene terephalate, polytetramethylene terephalate and mixtures thereof, the thermoplastic polyester functioning in combination with the inner and outer layers as a hydrocarbon barrier layer.

Embodiments and preferred aspects of the present invention can be taken from the subclaims making reference to the accompanying description and the drawing.

DESCRIPTION OF THE DRAWING

The objects, features and advantages of the present invention will become more readily apparent from the following description, reference being made to the following drawing in which:

Fig. 1 is a sectional view through a piece of tubing of the first and second embodiments of the present invention; and
Fig. 2 is a sectional view through a piece of tubing of the third embodiment of the present invention.

DESCRIPTION OF THE PREFERRED EMBODIMENT

The present invention is a multi-layer fuel line and vapor tube which contains at least one bonding layer and at least an outer and an inner tubing layer. The tubing of the present invention may also include at least one conductive layer. The tubing of the present invention is, preferably, fabricated by co-extruding given thermoplastic materials in a conventional co-extrusion process. The tubing may either be co-extruded to a suitable length or may be co-extruded in continuous length and cut to fit the given application subsequently. The tubing of the present invention may have an outer diameter up to 50 mm. However, in applications such as fuel lines and vapor recovery systems, outer diameter of up to 50,8 to 63,5 mm [2 to 2.5 inches] are preferred.

The material may have any suitable wall thickness desired. However, in automotive systems such as those described herein, wall thicknesses between 0.5 mm and 2 mm are generally employed with wall thicknesses of approximately 0.8 to 1.5 mm being preferred. While it is within the scope of this invention to prepare a tubing material having a plurality of overlaying layers of various thermoplastic materials, the tubing of the present invention generally has a maximum of five layers inclusive of the bonding layers but excluding any outer jackets. In the first and second embodiments of the present invention, the tubing material has three or four. In the third embodiment of the present invention, the tubing material has five.

The tubing 10 of the present invention is a material which is suitable for use in motor vehicles and comprises a relatively thick outer layer 12 which is nonreactive with the external environment and can withstand various shocks, vibrational fatigue, and changes in temperature as well as exposure to various corrosive or degradative compounds to which it would be exposed through the normal course of operation of the motor vehicle.

It is anticipated that both the outer tubing layer 12 as well as any interior layers bonded thereto would be suitable for use at an outer service temperature range between about -40°C and about 150°C, with a range of -20°C to 120°C being preferred. The various layers of tubing are integrally laminated to one another and resistant to delamination throughout the lifetime of the tubing. The tubing of the present invention has a tensile strength of no less than $25 N/mm^2$ and an elongation value of at least 150%. The tubing has a burst strength at 23°C and 120°C of at least 20 bar. The multi-layer tubing of the present invention is sufficiently resistant to exposure to brake fluid, engine oil and peroxides such as those which may be found in gasoline.

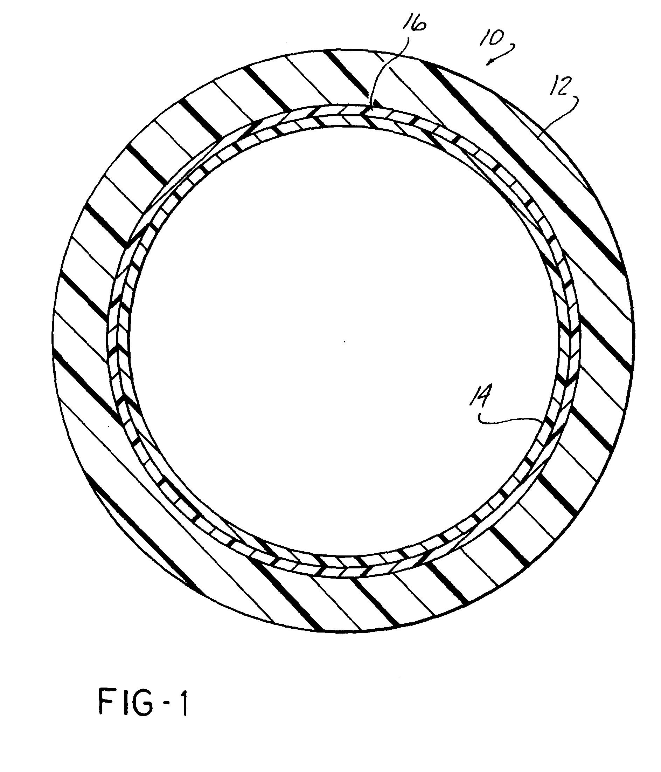

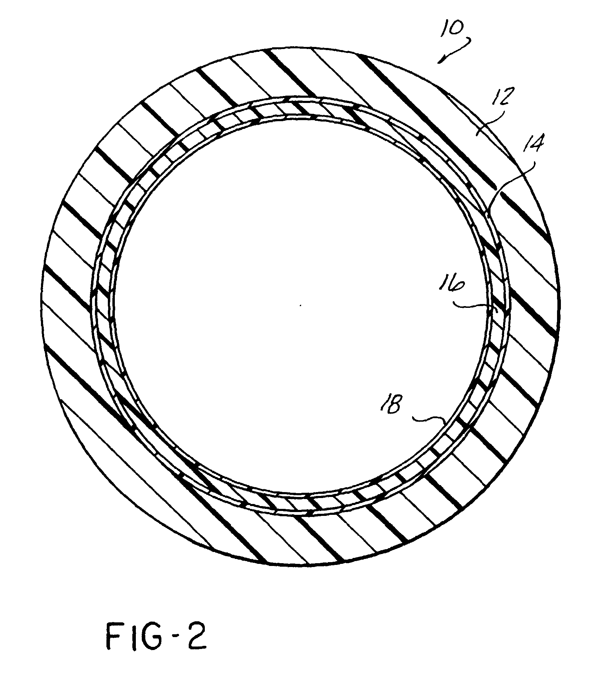

The outer layer 12 may be composed of any melt-processible extrudable thermoplastic material which is resistant to ultra violet degradation, extreme changes in heat and exposure to environmental hazards such as zinc chloride, and degradation upon contact with engine oil and brake fluid. In general, in the first embodiment of the present invention, the outer layer 12 as depicted in Fig. 1 consists essentially of six-carbon block polyamides, such as Nylon 6, which are resistant to degradation upon exposure to zinc chloride. In the second embodiment of the present invention as depicted in Fig. 1 and third embodiment of the present invention as depicted in Fig. 2, the exterior layer is composed of a thermoplastic selected from the group consisting of twelve-carbon block polyamides, eleven-carbon block polyamides, zinc chloride resistant six-carbon block polyamides, and mixtures thereof as well as selected thermoplastic elastomers. The thermoplastic elastomers are proprietary compositions and commercially available under trade names such as SANTOPRENE, KRATON, SARLINK and VICHEM.

The materials which compose the outer layers can be employed in their respective unmodified states or can be modified with various plasticizers, flame retardants and the like in manners which would be known to one reasonably skilled in the art. In general, the respective materials which make up the outer layer 12 may be composed of any melt-processible extrudable thermoplastic material which is resistant to ultra violet degradation, extreme changes in heat and exposure to environmental hazards such as zinc chloride, and degradation upon contact with engine oil and brake fluid.

In the first embodiment of the present invention, the exterior layer consists essentially of six-carbon block polyamides, such as Nylon 6, which either inherently exhibit sufficient resistance or contain effective amounts of suitable modifying agents to achieve such resistance to degradation upon exposure to zinc chloride.

The Nylon 6 which composes the outer layer can be employed can also be modified with various plasticizers, flame retardants and the like in manners which would be known to one reasonably skilled in the art.

In the first embodiment, the outer layer 12 is, preferably composed of a polyamide thermoplastic derived from the condensation polymerization of caprolactam. Such materials are commonly referred to as six-carbon block polyamides or Nylon 6. In this embodiment, the six-carbon block polyamide contains sufficient quantities of modifying agents to impart a level of zinc chloride resistance greater than or equal to that required by test method SAE J844; non-reactivity after 200 hour immersion in a 50% by weight aqueous zinc chloride solution. In the preferred embodiment, the six-carbon block polyamide material is a multi-component system comprised of a Nylon-6 copolymer blended with other Nylons and olefinic compound. The zinc-chloride resistant Nylon-6 of choice will have a melt temperature between about 220°C and 240°C. Examples of thermoplastic materials suitable for use in the tubing of the present invention are propriety materials which can be obtained commercially under the trade names M-7551 from NYCOA Corporation and ALLIED 1779 from Allied Chemical.

The six-carbon black polyamide may, optionally, include other modifying agents such as various plasticizing agents generally present in amounts between about 1.0% and about 13% by total weight of the thermoplastic composition. as are readily known in the art. The polyamide material employed, preferably, is an impact-modified material capable of withstanding impacts of at least 2 ft. lbs. at temperatures below about -20°C.

In the second and third embodiments of the present invention, the outer layer 12 is composed of a thermoplastic selected from the group consisting of twelve-carbon block polyamides, eleven-carbon block polyamides as well as zinc chloride resistant six-carbon block polyamides, or thermoplastic elastomers. These thermoplastic elastomers are proprietary compositions and commercially available under trade names such as SANTOPRENE, KRATON, SARLINK and VICHEM. The materials which compose the outer layer in the second embodiment can be present in their unmodified state or can be modified with various plasticizers, flame retardants and the like in manners which would be known to one reasonably skilled in the art.

In the second and third embodiments, a polyamide such as Nylon 12 is, preferably, effectively employed. It is anticipated that a thermoplastic such as Nylon 12 may be either modified or unmodified. If modified, it is anticipated that the material will contain various plasticizers as are readily known in the art. In the second embodiment, the polyamide will contain up to 17% by composition weight plasticizer; with amounts between about 1% and about 13% being preferred.

In the present invention, the outer layer 12 has a wall thickness sufficient to provide suitable strength an endurance to the multi-layer tubing of the present invention. In applications involving automotive vehicles, the outer layer 12 comprises between about 50% and about 60% of the total wall thickness. In general, in the first embodiment, the outer layer has a wall thickness between about 0.5 mm and about 0.8 mm; with a preferred wall thickness between about 0.6 mm and about 0.7 mm.

In the second embodiment, the outer layer 12, preferably, has a wall thickness between about 0.5 mm and about 1 mm with a preferred range being between about 0.6 mm and about 0.8 mm. In the third embodiment, the Nylon 12 outer layer 12 preferably has a wall thickness between about 0.5 mm and about 0.8 mm; with a preferred range between about 0.6 and about 0.75 mm. As indicated previously, the tubing material of the present invention can be extruded by conventional co-extrusion methods to any continuous length desired.

The intermediate bonding layer 14 is integrally bonded to the inner surface of the thick outer polyamide layer 12. In the first and second embodiments of the present invention, the intermediate bonding layer 14 is a chemically dissimilar permeation resistant, chemical resistant, fuel resistant thermoplastic material which is melt processible in normal ranges of extrusion, i.e. about 175° to about 250°C. By the term "chemically dissimilar" it is meant that the intermediate bonding layer 14 consists essentially of a non-polyamide material which is capable of adhesion to a bonding layer interposed between the thick outer layer and the inner layer in a manner which will be described subsequently.

The material employed in the intermediate bonding layer is a thermoplastic material which permits the establishment of a homogeneous bond between the inner and outer layers and exhibits properties of resistance to permeation of aliphatic and aromatic materials such as those found in fuel. The thermoplastic material employed herein is preferably a melt-processible co-extrudable thermoplastic which may or may not contain various plasticizers and other modifying agents. In general, the material employed in the intermediate bonding layer is a more elastic material than that employed in the associated inner layer.

In the first embodiment, the thermoplastic material which comprises the intermediate bonding layer 14 is a thermoplastic material selected from the group consisting of co-polymers of substituted or unsubstituted alkenes having less than four carbon atoms and vinyl alcohol, alkenes having less than four carbon atoms and vinyl acetate, and mixtures thereof. In this embodiment, the thermoplastic material employed will be resistant to permeation by and interaction with short chain aromatic and aliphatic compounds such as those which would be found in gasoline.

The preferred material employed in the first embodiment is a copolymer of ethylene and vinyl alcohol which has an ethylene content between about 27% and about 35% by weight with an ethylene content between about 27% and about 32% being preferred. Examples of suitable materials which can be employed in the tubing of the present invention include ethylene vinyl alcohol commercially available from EVA/LA.

In the first embodiment, the thermoplastic material employed in the intermediate bonding layer 14 is capable of serving as a hydrocarbon barrier to prevent significant permeation of the aromatic and aliphatic components of gasoline through to the polyamide outer layer of the tubing and thus, out to the surrounding environment. The effectiveness of the barrier layer at preventing such permeation will vary depending on numerous factors including but not limited to the thickness and composition of the inner layer, the thickness of the bonding layer and the composition of the materials conveyed through the tubing. It is anticipated that the bonding layer will be capable of providing the tubing of the present invention with a passive hydrocarbon permeation level less than about 0.5 g/m$^2$ per 24 hour.

In the second embodiment, the thermoplastic material which comprises the interior bonding layer 16 is a thermoplastic polyester derived from ethylene glycol selected from the group consisting of polybutylene terepthalate, polyethylene terepthalate, polyteremethylene terepthalate, and mixtures thereof. The preferred material is polybutylene terepthalate. Suitable material is commercially available under the trade name 1607 ZE40 from Hüls of Dusseldorf, Germany.

In the second embodiment, the thermoplastic material employed in the intermediate bonding layer 16 also exhibits characteristics which permit resistance to permeation by short chain aromatic and aliphatic compounds. These permeation resistant characteristics synergistically interact with the inner polyamide layer such that the total permeation resistance is unexpectedly increased when the thermoplastic interior layer is bonded to the inner polyamide layer. Thus, the resistance to permeation to short chain aromatic and aliphatic hydrocarbons exhibited by the multi-layer material exceeds the permeation resistance exhibited by individual layers of either polybutylene terepthalate or polyamide of a thickness equal to or greater than the multi-ply composite of the present invention.

In the first and second embodiments, the material employed in the intermediate bonding layer 14 can, optionally, exhibit conductive characteristics rendering it is capable of dissipation of electrostatic charges in the range of 10$^4$ to 10$^9$ ohm/cm$^2$. The thermoplastic material employed in the present invention may include, in its composition, a conductive media in sufficient quantity to permit electrostatic dissipation in the range defined. The conductive media may be any suitable material of a composition and shape capable of effecting this static dissipation. The conductive material may be selected from the group consisting of elemental carbon, stainless steel and highly conductive metals such as copper, silver, gold, nickel, silicon and mixtures thereof. The term "elemental carbon" as used herein is employed to describe and include materials commonly referred to as "carbon black". The carbon black can be present in the form of carbon fibers, powders, spheres, and the like.

The amount of conductive material contained in the thermoplastic is generally limited by considerations of low temperature durability and resistance to the degradative effects of the gasoline or fuel passing through the tubing. The amount of conductive material employed may be that amount sufficient to impart electrostatic dissipation characteristics to the tubing. When employed, the maximum amount of conductive material in the thermoplastic material is less than 5% by volume.

The conductive material can either be interstitially integrated into the crystalline structure of the polymer or can be co-polymerized therewith. Without being bound to any theory, it is believed that carbon-containing materials such as carbon black may be subject to carbon co-polymerization with the surrounding thermoplastic material. Materials such as stainless steel are more likely to be interstitially integrated into the crystalline structure of the polymer.

The intermediate bonding layer 14 serves to bond the thick outer layer 12 to the inner layer 16 to form a secure laminar bond therebetween. The inner layer 16 provides a stable fuel-contacting surface on the interior of the tube 10.

In the third embodiment, the tubing 10 of the present invention also includes an intermediate bonding layer 14 adhering and attached to the inner surface of the thick outer layer 12. The intermediate bonding layer 14 may be co-extruded with the other layers and is composed of a material which is capable of achieving a suitable homogeneous bond between itself, the thick outer layer and any inner layers interposed thereon. The intermediate bonding layer 14 is generally composed of a more elastic material than that employed in inner layers, the compositions of which will be described subsequently.

In the third embodiment, the intermediate bonding layer 14 is composed of a thermoplastic material which may exhibit properties of resistance to the permeation of aliphatic and aromatic materials such as those found in fuel in addition to exhibiting suitable bonding characteristics. The thermoplastic material employed herein is preferably a melt-processible co-extrudable fluoroplastic blend which may optionally contain various plasticizers and other modifying agents. The intermediate bonding layer 14 is, preferably, a blend containing polyvinylidine difluoride polymers, polyvinyl fluoride polymers, or mixtures thereof which exhibit an infinity to conventional polymers such as Nylon 12. In the preferred embodiment, polyvinylidine difluoride is employed. One such polymeric material suitable for use in the multi-layer tubing of the present invention is commercially available from Central Glass of Ube City, Japan under the trade designation CEFRAL SOFT XUA-2. This proprietary material is a graft copolymer of a fluorine-containing elastomeric polymer with a fluorine-containing crystalline polymer. The elastomeric polymer is, preferably, a material copolymerized from an alkyl difluoride selected from the group consisting of vinyl difluoride, vinylidine difluoride, and mixtures thereof, and a chlorofluoroalkene selected from the group consisting of ethylene chlorotrifluoroethylene. The crystalline polymer is preferably a haloalkene such as ethylene chlorotrifluoroethylene.

In the third embodiment, the bonding layer 14 is the product of the copolymerization of ethylene chlorotrifluoroethylene and a vinylidine difluoride chlorotrifluoroethylene copolymer having a melting point between about 180°C and about 210°C and a molding temperature between about 230°C and about 260°C.

The inner layer 16 may be composed of any melt-processible extrudable thermoplastic material which is resistant to ultra violet degradation, extreme changes in heat and exposure to gasoline and its additives. The material of choice may also exhibit resistance to environmental hazards such as exposure to zinc chloride, and resistance to degradation upon contact with materials such as engine oil and brake fluid.

In the first embodiment, the preferred material is a polyamide derived from the condensation polymerization of caprolactam. Suitable materials are commonly referred to as six-carbon block polyamides or Nylon 6. The six-carbon block polyamides employed herein may contain various plasticizers, fire retardants and the like as well as sufficient quantities of modifying agents to impart a level of zinc chloride resistance greater than or equal to that required by test method SAE J844: i.e. non-reactivity after 200 hour immersion in a 50% by weight aqueous zinc chloride solution.

In the first embodiment, the six-carbon block polyamide material employed is a multi-component system comprised of a Nylon-6 copolymer blended with other Nylons and olefinic compounds. The six-carbon block polyamide material of choice will is preferably resistant to zinc chloride and has a melt temperature between about 220°C and 240°C. Examples of thermoplastic materials suitable for use in the tubing of the present invention are propriety materials which can be obtained commercially under the trade names M-7551 from NYCOA Corporation and ALLIED 1779 from Allied Chemical.

In instances where the six-carbon block polyamide material employed in the first embodiment of the present invention includes plasticizing agents, these materials are generally present in amounts between about 1.0% and about 13% by total weight of the thermoplastic composition. The polyamide material employed, preferably, is an impact-modified material capable of withstanding impacts of at least 1,344 m/Kg [2 ft./lbs.] at temperatures below about -20°C.

In the first embodiment, the inner layer 16 may also contain suitable material in sufficient quantities to impart electrostatic conductivity characteristics to the tubing of the present invention. When employed, the material is preferably capable of dissipation of electrostatic charges in the range of $10^4$ to $10^9$ ohm/cm$^2$. The thermoplastic material employed in the present invention may include, in its composition, a conductive media in sufficient quantity to permit electrostatic dissipation in the range defined. The conductive media may be any suitable material of a composition and shape capable of effecting this static dissipation. The conductive material may be selected from the group consisting of elemental carbon, stainless steel and highly conductive metals such as copper, silver, gold, nickel, silicon and mixtures thereof. The term "elemental carbon" as used herein is employed to describe and include materials commonly referred to as "carbon black". The carbon black can be present in the form of carbon fibers, powders, spheres, and the like.

The amount of conductive material contained in the thermoplastic is generally limited by considerations of low temperature durability and resistance to the degradative effects of the gasoline or fuel passing through the tubing. The amount of conductive material employed may be that amount sufficient to impart electrostatic dissipation characteristics to the tubing. When employed, the maximum amount of conductive material in the thermoplastic material is less than 5% by volume.

The conductive material can either be interstitially integrated into the crystalline structure of the polymer or can be co-polymerized therewith. Without being bound to any theory, it is believed that carbon-containing materials such as carbon black may be subject to carbon co-polymerization with the surrounding thermoplastic material. Materials such as stainless steel are more likely to be interstitially integrated into the crystalline structure of the polymer.

In the second embodiment, the thermoplastic material employed in the inner layer 14 is a melt-processible extrudable thermoplastic material resistant to extreme changes in heat and exposure to chemical intervals such as are found in engine oil and brake fluid. The thermoplastic material of choice is, preferably, chemically similar in structure and composition to the thermoplastic material employed in the thick outer layer. As used herein, the term "chemically similar material" is defined as a thermoplastic material selected from the group consisting of 12 carbon block polyamides, 11 carbon block polyamides as well as zinc chloride resistant 6 carbon block polyamides, thermoplastic elastomers and mixtures thereof. The thermoplastic elastomers which can successfully be employed in the tubing of the present invention are proprietary compositions commercially available under trade names such as SANTOPRENE, KRATON, SARLINK and VICHEM. The thermoplastic material employed in the inner layer of the tubing of the present invention either may be identical to the material employed in the thick outer layer or may be a different thermoplastic selected from those listed to take advantage of specific properties of the various thermoplastics. In the preferred embodiment, the inner layer 14 is composed of a material similar to or identical to the thick outer layer. In the preferred embodiment, a polyamide such as Nylon 12 can be effectively employed.

In the second embodiment, the thermoplastic employed in the inner layer 14 may be either modified or unmodified. If modified, it is anticipated that the material will contain various plasticizers as are readily known in the art. In the preferred embodiment, the polyamide will contain up to 17% by composition weight plasticizer; with amounts between about 1% and about 13% being preferred.

In the first embodiment, the inner layer has the minimum wall thickness sufficient to achieve the permeation resistance desired. In general, the inner layer is thinner than the outer layer with the thickness of the outer layer being between about 50% and about 60% of the total wall thickness of the tubing or between 55% and 60% of the thickness of the thick outer layer. In the specified embodiment, the inner wall thickness is between about 0.01 mm and about 0.2 mm with a thickness of about 0.05 mm to about 0.17 mm being preferred. The intermediate bonding layer generally may have a thickness less than or equal to that of the inner layer.

In the second embodiment, the inner layer 14 may have a thickness sufficient to supply strength and chemical resistance properties to the multi-layer tubing. Specifically, the inner layer 14 is of sufficient thickness to impede permeation of aliphatic and aromatic hydrocarbon molecules and migration of those molecules through to the thick outer layer. In the present invention, the inner layer has a wall thickness less than that of the thick outer layer. In the preferred embodiment, the inner layer has a wall thickness between about 10% and 25% that of the outer layer; preferably less than between about 0.05 mm and about 0.4 mm; with a wall thickness between about 0.1 mm and about 0.3 mm being preferred.

In the first embodiment, the intermediate bonding layer is of sufficient thickness to permit an essentially homogeneous bond between the inner and outer layers. In general, the intermediate bonding layer can be thinner than the other two layers and can constitute between about 10% and about 50% of the total wall thickness or between about 20% and about 30% of the thickness of the outer layer. In the specified embodiment, the thickness of the intermediate bonding layer is between about 0.01 mm and about 0.25 mm with a thickness between about 0.05 mm and about 0.20 mm being preferred.

In the second embodiment, the inner layer 14 and the bonding layer 16 are maintained at the minimum thickness sufficient to prevent permeation of the fuel through the tubing material to the thick outer layer and on through to the outer environment. It is preferred that the amount of hydrocarbon permeation through the tubing of the present invention be no greater than 0.5 grams per meter squared in a 24 hour interval. It is anticipated that the thickness of both the inner and intermediate layers can be modified to accomplish this end. In the preferred embodiment, the inner layer has a thickness between about 0.05 mm and about 0.2 mm with a thickness of about 0.1 mm to about 0.2 mm being preferred. The intermediate bonding layer generally has a thickness less than or equal to that of the inner layer. In general, the intermediate bonding layer has a thickness between about 0.05 mm and about 0.2 mm with a thickness between about 0.1 mm and about 0.2 mm being preferred.

In the third embodiment, the next layer is an interior layer 16 which is composed of a chemically dissimilar permeation resistant, chemical resistant, fuel resistant thermoplastic material which is melt-processible in normal ranges of extrusion, i.e. about 175° to about 250°C. By the term "chemically dissimilar" it is meant that the interior layer 16 is a non-polyamide material which is capable of adhesion to the interior bonding layer 14 interposed between the thick outer layer 12 and the interior layer 16.

In the preferred embodiment, the thermoplastic material which comprises the interior layer 16 is selected from the group consisting of polyvinylidine fluoride, polyvinyl fluoride, and mixtures thereof. The material can also be a graft copolymer of the preceding materials together with a fluorine-containing polymer such as copolymers of vinylidine fluoride and chlorotrifluoroethane. Suitable material employed would contain between about 60% and about 80% by weight polyvinylidine difluoride. Materials so formed have a melting point between about 200 and about 220°C and a molding temperature between about 210 and about 230°C.

In the third embodiment, the multi-layer tubing of the present invention also includes an innermost electrostatic dissipation layer 18 which is also capable of serving as a hydrocarbon barrier to assist in the prevention of permeation of aromatic and aliphatic compounds found in gasoline through to the outer layer 12 of the tubing and, thus, out to the surrounding environment.

In this third embodiment, the innermost layer 18 is integrally bonded to the inner surface of the interior layer 16. In the present invention, the interior layer 18 is composed of a thermoplastic material which is chemically dissimilar to the thermoplastic material employed in the outer layer 12 which is melt-processible in the normal ranges of extrusion, i.e. about 175°C to about 250°C. The thermoplastic material employed in the innermost layer 18 is capable of sufficiently permanent laminar adhesion to the interior layer 16.

In the third embodiment, the thermoplastic material which comprises the innermost layer 18 is selected from the group consisting of polyvinylidine fluoride, polyvinyl fluoride, and mixtures thereof. The preferred material is a polyvinylidine fluoroplastic derived from the thermal dihalogenation of chlorodifluoro ethane. Suitable material is commercially available under the trade name XPV-504KRC CEFRAL SOFT CONDUCTIVE. Alternately, the innermost layer 18 may be composed of a modified material which is chemically similar to the interior layer 16.

The innermost layer 18 exhibits electrostatic conductive characteristics in that it is capable of dissipation of electrostatic charge in the range of $10^4$ to $10^9$ ohm/cm$^2$. The fluoroplastic material employed in the present invention may be inherently conductive in these ranges or, preferably, includes in its composition a conductive media in sufficient quantity to permit electrostatic dissipation in the range defined. The conductive material may be any suitable material of a composition and shape capable of effecting this static dissipation. The conductive material may be selected from the group consisting of elemental carbon, stainless steel and highly conductive metals such as copper, silver, gold, nickel, silicon and mixtures thereof. The term "elemental carbon" as used herein is employed to describe and include materials commonly referred to as "carbon black". The carbon black can be present in the form of carbon fibers, powders, spheres, and the like.

The amount of conductive material contained in the fluoroplastic is generally limited by considerations of low temperature durability and resistance to the degradative effects of the gasoline or fuel passing through the tubing. In the preferred embodiment, the fluoroplastic material contains conductive material in an amount sufficient to effect electrostatic dissipation. However, the maximum amount employed therein is less than 5% by volume.

The conductive material can either be interstitially integrated into the crystalline structure of the polymer or can be co-polymerized therewith. Without being bound to any theory, it is believed that carbon-containing materials such as carbon black may be subject to carbon co-polymerization with the surrounding fluoroplastic material. Material such as stainless steel are more likely to be interstitially integrated into the crystalline structure of the polymer.

In the third embodiment, the innermost layer 18 is maintained at thicknesses suitable for achieving static dissipation and suitable laminar adhesion respectively; generally between about 10% and 20% of the thick outer layer. The thickness of the innermost layer 18 is preferably between about 0.1 mm and about 0.2 mm. The intermediate bonding layer preferably has a thickness approximately equal to the thickness of the innermost layer preferably between about 0.05 mm and about 0.15 mm.

In the third embodiment, the interior layer 16 is maintained at a thickness suitable to achieve a hydrocarbon permeation value for the tubing of the present invention no greater than about 0.5 g/m$^2$ in a 24 hour interval. To accomplish this, the characteristics of the interior layer 16 can be relied upon solely or in concert with the intermediate bonding layer. It is anticipated that the thickness of the inner and intermediate layers can be modified to accomplish this end. In this embodiment, the interior layer 16 has a thickness between about 10% and about 20% of the thick outer layer. The interior layer has a thickness between about 0.15 mm and about 0.25 mm with a thickness of about 0.18 mm to about 0.22 mm being preferred. The intermediate bonding layer 14 is maintained at a thickness sufficient to permit sufficient laminar adhesion between the outer and interior layers. The intermediate bonding layer generally has a thickness less than that of the inner layer 16. The thickness of this layer is, preferably, between about 0.05 and about 0.1 mm.

The total wall thickness of the tubing of the present invention is generally between about 0.5 mm and about 2.0 mm with a wall thickness between about 0.8 and about 1.25 mm being preferred.

The tubing of the present invention may also, optionally include an outer jacket (not shown) which surrounds the outer layer. The fourth outer jacket may be either co-extruded with the other layers during the extrusion process or may be put on in a subsequent process such as cross-extrusion. The outer jacket may be made of any material chosen for its structural or insulative characteristics and may be of any suitable wall thickness. Preferably, the outer jacket may be made of a thermoplastic material selected from the group consisting of zinc-chloride resistant Nylon 6, Nylon 11, Nylon 12, polypropylene, and thermoplastic elastomers such as SANTOPRENE, KRATON, VICHEM and SARLINK. If desired, these materials may be modified to include flame retardants, plasticizers and the like.

In the second embodiment, the outer jacket may, preferably, exhibit conductive characteristics in that it is capable of dissipation of electrostatic charge in the range of $10^4$ to $10^9$ ohm/cm². The material which composes the outer jacket may be inherently conductive in these ranges or, preferably, includes in its composition a conductive media in sufficient quantity to permit electrostatic dissipation in the range defined. The conductive media may be any suitable material of a composition and shape capable of effecting this static dissipation. The conductive material may be selected from the group consisting of elemental carbon, stainless steel and highly conductive metals such as copper, silver, gold, nickel, silicon and mixtures thereof. The term "elemental carbon" as used herein is employed to describe and include materials commonly referred to as "carbon black". The carbon black can be present in the form of carbon fibers, powders, spheres, and the like.

The amount of conductive material contained in the outer jacket is generally limited by considerations of low temperature durability and resistance to the degradative effects of the gasoline or fuel passing through the tubing. In the preferred embodiment, the thermoplastic material contains conductive material in an amount sufficient to effect electrostatic dissipation. However, the maximum amount employed therein is preferably less than 5% by volume.

The conductive material can either be interstitially integrated into the crystalline structure of the polymer or can be co-polymerized therewith. Without being bound to any theory, it is believed that carbon-containing materials such as carbon black may be subject to carbon co-polymerization with the surrounding thermoplastic material. Material such as stainless steel are more likely to be interstitially integrated into the 8crystalline structure of the polymer.

## Claims

1. A layered tubing (10) for use in a motor vehicle, the tubing (10) comprising:

    a thick flexible outer layer (12) having an inner and an outer face, the outer layer (12) consisting essentially of an extrudable thermoplastic having an elongation value of at least 150% and an ability to withstand impacts of at least 1,344 $\frac{m}{Kg}$ [2 ft/lbs] at temperatures below about -20°C, wherein the extrudable thermoplastic of the thick outer layer (12) is an extrudable melt-processible zinc chloride-resistant six-carbon block polyamide;
    a thin intermediate bonding layer (16) bonded to the inner face of the thick outer layer (12), the bonding layer (16) consisting essentially of an extrudable melt processible thermoplastic resistant to permeation by short-chain hydrocarbons, the bonding layer (16) consisting of a thermoplastic which is chemically dissimilar to the extrudable thermoplastic employed in the outer layer (12) and is capable of sufficiently permanent laminar adhesion to the inner face of the thick outer layer (12); and
    an inner layer (14) having a thickness less than the thickness of the outer layer (12) bonded to the intermediate bonding layer (16), the inner layer (14) consisting of an extrudable, melt-processible thermoplastic polyamide capable of sufficiently permanent laminar adhesion with the intermediate bonding layer (16) having an elongation value of at least 150% and an ability to withstand impacts of at least 1,344 $\frac{m}{Kg}$ [2 ft/lbs] at temperatures below about -20°C characterized in that:
    the thermoplastic material employed in the intermediate bonding layer (16) includes as a major constituent an extrudable, melt-processible thermoplastic polyester selected from the group consisting of polybutylene terepthalate, polyethyleneterepthalate, polytetramethylene terepthalate, and mixtures thereof, the thermoplastic polyester functioning in combination with the inner and outer layers (12, 14) as a hydrocarbon barrier layer.

2. The tubing of claim 1 wherein the thermoplastic material employed in the intermediate bonding layer (16) consists essentially of polybutylene terepthalate.

3. The tubing of claim 1 or 2 wherein the extrudable melt-processible thermoplastic of the inner layer (14) is selected from the group consisting of Nylon 11, Nylon 12, zinc chloride-resistant Nylon 6, and mixtures thereof.

4. The tubing of claim 3 wherein the inner layer (14) contains conductive material in an amount less than about 5% by volume of the polymeric material sufficient to provide electrostatic dissipation capability in a range between about $10^4$ and about $10^9$ ohm/cm², the conductive material selected from the group consisting of elemental carbon, copper, silver, gold, nickel, silicon, and mixtures thereof.

5. The tubing of claims 1, 2, 3 or 4 wherein the thermoplastic material of the outer layer (12) is selected from the group consisting of Nylon 11, Nylon 12, thermoplastic elastomers, zinc chloride resistant Nylon 6, and mixtures thereof.

6. The tubing of claim 1, 2, 3 or 4 wherein the inner layer (14) comprises:

an effective amount of a polyamide selected from the group consisting of Nylon 11, Nylon 12, Nylon 6, and mixtures thereof; and between about 1 and about 17% by volume of a thermoplastic plasticizer material.

7. The layered tubing of claims 1, 2, 3, 4, 5 or 6 further comprising:

an exterior jacket overlying the thick outer (12) layer (12), the exterior jacket composed of a material consisting essentially of a thermoplastic material selected from the group consisting of Nylon 11, Nylon 12, zinc chloride resistant Nylon 6, thermoplastic elastomers, and mixtures thereof.

8. The tubing of claim 7 wherein the outer jacket contains quantities of a conductive material in an amount less than 5% by volume, sufficient to provide electrostatic dissipation capability in a range between about $10^4$ to $10^9$ ohm/cm$^2$, the conductive material is selected from the group consisting of elemental carbon, copper, silver, gold, nickel, silicon, and mixtures thereof.

9. The tubing of claims 1, 2, 3, 4, 5, 6 or 7 wherein the intermediate bonding layer (16) in combination with the inner and outer layers (12, 14) provides a tubing (10) with a hydrocarbon emission rate less than about 0.5 g/m$^2$ in a 24 hour interval.

10. The tubing of any of the preceeding claims wherein the intermediate bonding layer (16) and the inner layer (14) each have a thickness between about 0.05mm and about 0.2mm.

11. A layered tubing for use in a motor vehicle, as claimed in any one of the preceeding claims, the tubing (10) further comprises:

an innermost electrostatic dissipation layer (18) integrally bonded to the multi-layer tubing (10), the electrostatic dissipation layer (18) consisting of an extrudable, melt-processible thermoplastic material capable of sufficiently permanent laminar adhesion with the intermediate bonding layer (16) and of dissipating electrostatic energy.

12. The layered tubing of claim 11 wherein the innermost electrostatic dissipation layer (18) consists essentially of:

a thermoplastic material which consists essentially of a fluoroplastic selected from the group consisting of polyvinylidine fluoride, polyvinyl fluoride, and mixtures thereof; and a conductive material present in an amount less than 5% by volume, sufficient to provide an electrostatic dissipation capacity between about $10^4$ to about $10^9$ ohm/cm$^2$, the conductive material selected from the group consisting of elemental carbon, gold, silver, nickel, copper, silicon, and mixtures thereof.

13. The multi-layer tubing of claims 11 or 12 wherein the interior layer (14) is a thermoplastic material consisting essentially of a fluoroplastic material selected from the group consisting of polyvinylidine fluoride, polyvinyl fluoride, and mixtures thereof.

14. The multi-layer tubing of claim 13 wherein the fluoroplastic material further consists of copolymers of vinylidine difluoride and chlorotrifluoroethane copolymerized with polyvinylidine fluoride, copolymers of vinylidine difluoride and chlorotrifluoroethane copolymerized with polyvinyl fluoride, and mixtures thereof.

15. The multi-layer tubing of claims 11, 12, 13 or 14 wherein the interior layer (14) has a thickness between about 10% and about 20% of the thick outer layer.

16. The multi-layer tubing of claims 11, 12, 13, 14 or 15 wherein the fluoroplastic material of the innermost layer (18) further comprises copolymers of vinylidine difluoride and chlorotrifluoroethane copolymerized with polyvinylidine fluoride, copolymers of vinylidine difluoride and chlorotrifluoroethane copolymerized with polyvinyl fluoride, and mixtures thereof.

17. The multi-layer tubing of claims 11, 12, 13, 14, 15 or 16 wherein the innermost electrostatic dissipation layer (18) has a thickness between about 0.1% and about 0.2% of the thick outer layer (12).

18. The multi-layer tubing of claims 11, 12, 13, 14, 15, 16 or 17 wherein the bonding layer (16) is a thermoplastic material consisting essentially of:

a fluoroplastic material selected from the group consisting of ethylene dichlorotrifluoroethylene, and mixtures thereof; and a graft copolymer selected from the group consisting of copolymers of vinylidine difluoride and chlorotrifluoroethylene copolymerized with polyvinylidine difluoride, copolymers of vinylidine difluoride and chlorotrifluoroethylene copolymerized with ethylene dichlorotrifluoroethylene, and mixtures thereof.

**Patentansprüche**

1. Geschichtetes Schlauchmaterial (10) zur Verwendung in einem Motorfahrzeug, wobei das Schlauchmaterial (10) umfaßt:

   eine dicke flexible äußere Schicht (12) mit einer inneren und einer äußeren Fläche, wobei die äußere Schicht (12) im wesentlichen aus einem extrudierbaren Thermoplast besteht, mit einem Längsdehnungswert von wenigstens 150 % und einer Fähigkeit, Schlägen von wenigstens 1,344 m/kg [2 ft/lbs] bei Temperaturen unter etwa -20°C zu widerstehen, wobei der extrudierbare Thermoplast der dicken äußeren Schicht (12) ein extrudierbares, schmelzverarbeitbares, zinkchloridbeständiges 6-Kohlenstoff-Block-Polyamid ist;
   eine dünne Zwischenklebeschicht (16), die auf die innere Fläche der dicken äußeren Schicht (12) geklebt ist, wobei die Klebeschicht (16) im wesentlichen aus einem extrudierbaren, schmelzverarbeitbaren Thermoplast besteht, welcher gegen einen Durchtritt durch kurzkettige Kohlenwasserstoffe resistent ist, wobei die Klebeschicht (16) aus einem Thermoplast besteht, welcher chemisch gegenüber dem in der äußeren Schicht (12) verwendeten extrudierbaren Thermoplast ungleichartig ist und welcher zu einer ausreichend permanenten laminaren Adhäsion an der inneren Fläche der dicken äußeren Schicht (12) fähig ist; und
   eine innere Schicht (14) mit einer Dicke, die geringer als die Dicke der auf die Zwischenklebeschicht (16) geklebten äußeren Schicht (12) ist, wobei die innere Schicht (14) aus einem extrudierbaren, schmelzverarbeitbaren thermoplastischen Polyamid besteht, welches die Fähigkeit zu einer ausreichend permanenten laminaren Adhäsion mit der Zwischenklebeschicht (16) hat und einen Längsdehnungswert von wenigstens 150 % sowie eine Fähigkeit aufweist, Schlägen von wenigstens 1,344 m/kg [2 ft/lbs] bei Temperaturen unterhalb etwa -20°C zu widerstehen, dadurch gekennzeichnet, daß: das in der Zwischenklebeschicht (16) verwendete thermoplastische Material als einen größeren Bestandteil einen extrudierbaren, schmelzverarbeitbaren thermoplastischen Polyester umfaßt, welcher aus der Gruppe ausgewählt wird, die aus Polybutylen-Terephtalat, Polyethylen-Terephtalat, Polytetramethylen-Terephtalat und Gemischen davon besteht, wobei der thermoplastische Polyester in Kombination mit der inneren Schicht (12) und der äußeren Schicht (14) als eine Kohlenwasserstoff-Sperrschicht wirkt.

2. Schlauchmaterial nach Anspruch 1, bei welchem das in der Zwischenklebeschicht (16) verwendete thermoplastische Material im wesentlichen aus Polybutylen-Terephtalat besteht.

3. Schlauchmaterial nach Anspruch 1 oder Anspruch 2, bei welchem der extrudierbare, schmelzverarbeitbare Thermoplast der inneren Schicht (14) aus der Gruppe ausgewählt wird, die aus Nylon 11, Nylon 12, zinkchloridbeständigem Nylon 6 und Gemischen davon besteht.

4. Schlauchmaterial nach Anspruch 3, bei welchem die innere Schicht (14) ein leitfähiges Material in einer Menge enthält, die geringer als etwa 5 Vol.-% des Polymermaterials ist und ausreicht, eine Elektrostatik-Dissipationsfähigkeit in einem Bereich zwischen etwa $10^4$ und etwa $10^9$ ohm/cm$^2$ zur Verfügung zu stellen, wobei das leitfähige Material aus der Gruppe ausgewählt wird, die aus Elementarkohlenstoff, Kupfer, Silber, Gold, Nickel, Silicium und Gemischen davon besteht.

5. Schlauchmaterial nach den Ansprüchen 1, 2, 3 oder 4, bei welchem das thermoplastische Material der äußeren Schicht (12) aus der Gruppe gewählt wird, die aus Nylon 11, Nylon 12, thermoplastischen Elastomeren, zinkchloridbeständigem Nylon 6 und Gemischen davon besteht.

6. Schlauchmaterial nach Anspruch 1, 2, 3 oder 4, bei welchem die innere Schicht (14) umfaßt:

   eine wirksame Menge eines Polyamides, welches aus der Gruppe ausgewählt wird, die aus Nylon 11, Nylon 12, Nylon 6 und Gemischen davon besteht; und
   zwischen etwa 1 und etwa 17 Vol.-% eines thermoplastischen Weichmachermaterials.

7. Geschichtetes Schlauchmaterial nach den Ansprüchen 1, 2, 3, 4, 5 oder 6, ferner umfassend:
   eine Außenhülle, die über der dicken äußeren Schicht (12) liegt, wobei die Außenhülle aus einem Material zusammengesetzt ist, welches im wesentlichen aus einem thermoplastischen Material besteht, das aus der Gruppe ausgewählt wird, die aus Nylon 11, Nylon 12, zinkchloridbeständigem Nylon 6, thermoplastischen Elastomeren und Gemischen davon besteht.

8. Schlauchmaterial nach Anspruch 7, bei welchem die äußere Hülle Mengen eines leitfähigen Materials in einer Größe enthält, die geringer als 5 Vol.-% ist, und die ausreichen, eine Elektrostatik-Dissipationsfähigkeit in einem Bereich zwischen etwa $10^4$ bis $10^9$ ohm/cm$^2$ zur Verfügung zu stellen, und bei welchem das leitfähige Material aus der Gruppe ausgewählt wird, die aus Elementarkohlenstoff, Kupfer, Silber, Gold, Nickel, Silicium und Gemischen davon besteht.

9. Schlauchmaterial nach den Ansprüchen 1, 2, 3, 4, 5, 6 oder 7, bei welchem die Zwischenklebeschicht (16) in Verbindung mit der inneren Schicht (12) und der äußeren Schicht (14) ein Schlauchmaterial (10) mit einer Kohlenwasserstoff-Emissionsrate zur Verfügung stellt, die geringer als etwa 0,5 g/m² in einem Zeitraum von 24 Stunden ist.

10. Schlauchmaterial nach einem der vorangehenden Ansprüche, bei welchem die Zwischenklebeschicht (16) und die innere Schicht (14) jeweils eine Dicke zwischen etwa 0,05 mm und etwa 0,2 mm haben.

11. Geschichtetes Schlauchmaterial zur Verwendung in einem Motorfahrzeug, wie in einem der vorangehenden Ansprüche beansprucht, wobei das Schlauchmaterial (10) ferner umfaßt:

eine am weitesten innen liegende, mit dem Mehrschicht-Schlauchmaterial (10) integral verklebte Elektrostatik-Dissipationsschicht (18), wobei die Elektrostatik-Dissipationsschicht (18) aus einem extrudierbaren, schmelzverarbeitbaren thermoplastischen Material besteht, welches zu einer ausreichend permanenten laminaren Adhäsion mit der Zwischenklebeschicht (16) und zu einer Dissipation elektrostatischer Energie fähig ist.

12. Geschichtetes Schlauchmaterial nach Anspruch 11, bei welchem die am weitesten innen liegende Elektrostatik-Dissipationsschicht (18) im wesentlichen besteht aus:

einem thermoplastischen Material, welches im wesentlichen aus einem Fluorkunststoff besteht, welcher aus der Gruppe ausgewählt wird, die aus Polyvinyliden-Fluorid, Polyvinyl-Fluorid und Gemischen davon besteht; und einem leitfähigen Material, welches in einer Menge vorhanden ist, die geringer als 5 Vol.-% ist und ausreicht, um eine Elektrostatik-Dissipationskapazität zwischen etwa $10^4$ bis etwa $10^9$ ohm/cm² zur Verfügung zu stellen, wobei das leitfähige Material aus der Gruppe gewählt wird, die aus Elementarkohlenstoff, Gold, Silber, Nickel, Kupfer, Silicium und Gemischen davon besteht.

13. Mehrschicht-Schlauchmaterial nach den Ansprüchen 11 oder 12, bei welchem die Innenschicht (14) ein thermoplastisches Material ist, welches im wesentlichen aus einem Fluorkunststoff-Material besteht, das aus der Gruppe ausgewählt wird, die aus Polyviniyliden-Fluorid, Polyvinyl-Fluorid und Gemischen davon besteht.

14. Mehrschicht-Schlauchmaterial nach Anspruch 13, bei welchem das Fluorkunststoff-Material ferner aus Copolymeren von Vinyliden-Difluorid und Chlortrifluorethan, mit Polyvinyliden-Fluorid copolymerisiert, ferner Copolymeren von Vinyliden-Difluorid und Chlortrifluorethan, mit Polyvinyl-Fluorid copolymerisiert, sowie Gemischen davon besteht.

15. Mehrschicht-Schlauchmaterial nach den Ansprüchen 11, 12, 13 oder 14, bei welchem die Innenschicht (14) eine Dicke zwischen etwa 10 % und etwa 20 % der dicken äußeren Schicht hat.

16. Mehrschicht-Schlauchmaterial nach den Ansprüchen 11, 12, 13, 14 oder 15, bei welchem das Fluorkunststoff-Material der am weitesten innen liegenden Schicht (18) ferner Copolymere von Vinyliden-Difluorid und Chlortrifluorethan, mit Polyvinyliden-Fluorid copolymerisiert, ferner Copolymere von Vinyliden-Difluorid und Chlortrifluorethan, mit Polyvinyl-Fluorid copolymerisiert, sowie Gemische davon umfaßt.

17. Mehrschicht-Schlauchmaterial nach den Ansprüchen 11, 12, 13, 14, 15 oder 16, bei welchem die am weitesten innen liegende Elektrostatik-Dissipationsschicht (18) eine Dicke zwischen etwa 0,1 % und etwa 0,2 % der dicken äußeren Schicht (12) hat.

18. Mehrschicht-Schlauchmaterial nach den Ansprüchen 11, 12, 13, 14, 15, 16 oder 17, bei welchem die Klebeschicht (16) ein thermoplastisches Material ist, welches im wesentlichen besteht aus:

einem Fluorkunststoff-Material, welches aus der Gruppe ausgewählt wird, die aus Ethylen-Dichlortrifluorethylen und Gemischen davon besteht; und einem Pfropf-Copolymer, welches aus der Gruppe ausgewählt wird, die aus Copolymeren von Vinyliden-Difluorid und Chlortrifluorethylen, mit Polyvinyliden-Difluorid copolymerisiert, ferner Copolymeren von Vinyliden-Difluorid und Chlortrifluorethylen, copolymerisiert mit Ethylen-Dichlortrifluorethylen, sowie Gemischen davon besteht.

**Revendications**

1. Tube multicouche (10) destiné à être utilisé dans un véhicule à moteur, le tube (10) comprenant :

une couche externe flexible épaisse (12) ayant une face interne et une face externe, la couche externe (12) étant constituée essentiellement d'une matière thermoplastique extrudable ayant une valeur d'allongement d'au moins 150 % et une aptitude à encaisser les chocs d'au moins 1,344 m/kg (2 pieds/livre) à des températures inférieures à -20°C environ, dans laquelle la matière thermoplastique extrudable de la couche externe épaisse (12) est un polyamide séquencé à 6 atomes de carbone résistant au chlorure de zinc et qui peut être traité à l'état fondu et extrudable,

une mince couche intermédiaire (16) de liaison qui est liée à la face interne de la couche externe épaisse (12), la couche de liaison (16) étant constituée essentiellement d'une matière thermoplastique extrudable qui peut être traitée à l'état fondu et qui résiste à la perméation des hydrocarbures à chaîne courte, la couche de liaison (16) étant constituée d'une matière thermoplastique qui est dissemblable au point de vue chimique de la matière thermoplastique extrudable utilisée dans la couche externe (12) et qui peut présenter une adhérence laminaire suffisamment permanente à la face interne de la couche externe épaisse (12), et

une couche interne (14) dont l'épaisseur est inférieure à l'épaisseur de la couche externe (12) liée à la couche intermédiaire de liaison (16), la couche interne (14) étant constituée d'un polyamide thermoplastique extrudable qui peut être traité à l'état fondu et qui possède une adhérence laminaire suffisamment permanente à la couche intermédiaire de liaison (16) ayant une valeur d'allongement d'au moins 150 % et une aptitude à supporter des impacts d'au moins 1,344 m/kg (2 pieds/livre) à des températures inférieures à -20 °C, caractérisé en ce que :

la matière thermoplastique utilisée dans la couche intermédiaire de liaison (16) comprend comme ingrédient principal, un polyester thermoplastique extrudable qui peut être traité à l'état fondu, choisi dans le groupe constitué par le téréphtalate de polybutylène, le téréphtalate de polyéthylène, le téréphtalate de polytétraméthylène et leurs mélanges, le polyester thermoplastique fonctionnant en combinaison avec les couches interne et externe (12, 14) comme couches d'arrêt pour les hydrocarbures.

2. Tube selon la revendication 1, dans lequel la matière thermoplastique utilisée dans la couche intermédiaire de liaison (16) est constituée essentiellement de téréphtalate de polybutylène.

3. Tube selon la revendication 1 ou 2, dans lequel la matière thermoplastique extrudable qui peut être traitée à l'état fondu de la couche interne (14) est sélectionnée dans le groupe constitué par le "Nylon 11", le "Nylon 12", le "Nylon 6" résistant au chlorure de zinc et leurs mélanges.

4. Tube selon la revendication 3, dans lequel la couche interne (14) contient un matériau conducteur en quantité inférieure à 5 % en volume du matériau polymère et suffisante pour assurer des possibilités de dissipation électrostatique dans une plage comprise entre environ $10^4$ et $10^9 \phi/cm^2$, le matériau conducteur étant choisi dans le groupe constitué par le carbone élémentaire, le cuivre, l'argent, l'or, le nickel, le silicium et leurs mélanges.

5. Tube selon la revendication 1, 2, 3 ou 4, dans lequel la matière thermoplastique de la couche externe (12) est sélectionnée dans le groupe constitué par le "Nylon 11", le "Nylon 12", les élastomères thermoplastiques, le "Nylon 6" résistant au chlorure de zinc et leurs mélanges.

6. Tube selon la revendication 1, 2, 3 ou 4, dans lequel la couche interne (14) comprend :

une quantité efficace d'un polyamide choisi dans le groupe constitué par le "Nylon 11", le "Nylon 12", le "Nylon 6" et leurs mélanges, et de 1 à 17 % environ en volume d'un matériau plastifiant thermoplastique.

7. Tube multicouche selon la revendication 1, 2, 3, 4, 5 ou 6, comprenant en outre :

une enveloppe extérieure recouvrant la couche externe épaisse (12), l'enveloppe extérieure étant composée d'un matériau constitué essentiellement d'une matière thermoplastique choisie dans le groupe constitué par le "Nylon 11", le "Nylon 12", le "Nylon 6" résistant au chlorure de zinc, les élastomères thermoplastiques et leurs mélanges.

8. Tube selon la revendication 7, dans lequel l'enveloppe externe contient des quantités d'une matière conductrice inférieure à 5 % en volume et suffisante pour assurer des possibilités de dissipation électrostatique dans une plage comprise entre environ $10^4$ et $10^9 \phi/cm^2$, et le matériau conducteur est sélectionné dans le groupe constitué par le carbone élémentaire, le cuivre, l'argent, l'or, le nickel, le silicium et leurs mélanges.

9. Tube selon la revendication 1, 2, 3, 4, 5, 6 ou 7, dans lequel la couche intermédiaire de liaison (16) combinée aux couches interne et externe (12, 14) forme un tube (10) ayant un débit d'émission d'hydrocarbures inférieur à environ 0,5 g/m² pendant un intervalle de 24 h.

10. Tube selon l'une quelconque des revendications précédentes, dans lequel la couche intermédiaire de liaison (16) et la couche interne (14) ont chacune une épaisseur comprise entre environ 0,05 et 0,2 mm.

11. Tube multicouche destiné à être utilisé dans un véhicule à moteur selon l'une quelconque des revendications précédentes, le tube (10) comprenant en outre :

une couche de dissipation électrostatique (18) placée la plus intérieur et liée sous forme solidaire au tube multicouche (10), la couche de dissipation électrostatique (18) étant constituée d'une matière thermoplastique extrudable qui peut être traitée à l'état fondu et qui peut assurer une adhérence laminaire suffisamment permanente à la couche intermédiaire de liaison (16) et dissiper l'énergie électrostatique.

12. Tube multicouche selon la revendication 1, dans lequel la couche la plus interne de dissipation électrostatique (18) est constituée essentiellement :

d'une matière thermoplastique constituée essentiellement d'une matière plastique fluorée choisie dans le groupe constitué par le fluorure de polyvinylidène, le fluorure de polyvinyle et leurs mélanges, et
d'un matériau conducteur présent en quantité inférieure à 5 % en volume mais suffisante pour donner une capacité de dissipation électrostatique comprise entre environ $10^4$ et $10^9$ ⏚/cm$^2$, le matériau conducteur étant choisi dans le groupe constitué par le carbone élémentaire, l'or, l'argent, le nickel, le cuivre le silicium et leurs mélanges.

13. Tube multicouche selon la revendication 11 ou 12, dans lequel la couche interne (14) est une matière thermoplastique constituée essentiellement d'une matière plastique fluorée choisie dans le groupe constitué par le fluorure de polyvinylidène, le fluorure de polyvinyle et leurs mélanges.

14. Tube multicouche selon la revendication 13, dans lequel la matière plastique fluorée est constituée en outre de copolymères de bifluorure de vinylidène et de chlorotrifluoréthane copolymérisé avec du fluorure de polyvinylidène, de copolymères de bifluorure de vinylidène et de chlorotrifluoréthane copolymérisé avec du fluorure de polyvinyle, ou de leurs mélanges.

15. Tube multicouche selon la revendication 11, 12, 13 ou 14, dans lequel la couche interne (14) a une épaisseur comprise entre environ 10 et 20 % de la couche externe épaisse.

16. Tube multicouche selon la revendication 11, 12, 13, 14 ou 15, dans lequel la matière plastique fluorée de la couche la plus interne (18) contient en outre des copolymères de bifluorure de vinylidène et de chlorotrifluoréthane copolymérisé avec du fluorure de polyvinylidène, des copolymères de bifluorure de vinylidène et de chlorotrifuoréthane copolymérisé avec du fluorure de polyvinyle, ou leurs mélanges.

17. Tube multicouche selon la revendication 11, 12, 13, 14, 15 ou 16, dans lequel la couche la plus interne de dissipation électrostatique (18) a une épaisseur comprise entre environ 0,1 et 0,2 % de la couche externe épaisse (12).

18. Tube multicouche selon la revendication 11, 12, 13, 14, 15, 16 ou 17, dans lequel la couche de liaison (16) est une matière thermoplastique constituée essentiellement

d'une matière plastique fluorée choisie dans le groupe constitué par l'éthylène dichlrotrifluoréthylène et leurs mélanges, et
un copolymère greffé choisi dans le groupe constitué par des copolymères de bifluorure de vinylidène et de chlorotrifluororéthylène copolymérisé avec du bifluorure de polyvinylidène, des copolymères de bifluorure de vinylidène et de chlrorotrifluoréthylène copolymérisé avec de l'éthylène dichlorotrifluoréthylène, et leurs mélanges.

FIG - 1

14

FIG-2